# EUROPÄISCHE PATENTANMELDUNG

(11) **EP 4 660 019 A1**
(43) Veröffentlichungstag der Anmeldung: **10.12.2025**
(21) Anmeldenummer: 25171196.6
(22) Anmeldetag: 17.04.2025
(51) Int. Cl.: B60R 19/48

(54) **AUFNAHMEEINRICHTUNG ZUR BEFESTIGUNG EINES SENSORS**

(30) Priorität: 06.06.2024 DE 102024115843
(71) Anmelder: RESRG Automotive SE & Co. KG, 95111 Rehau (DE)
(72) Erfinder: Garreis, Christian, 95111 Rehau (DE); Großmann, Philipp, 95111 Rehau (DE); Koch, Henning, 95111 Rehau (DE); Liebetrau, Mathias, 95111 Rehau (DE)

(57) **Zusammenfassung**

Die Erfindung betrifft eine Aufnahmeeinrichtung zur Befestigung eines Sensors (20) im Bereich einer durchgängigen Aussparung (1) in einem spitzgegossenen polymeren Fahrzeug-Verkleidungsteil (2), wobei die Aufnahmeeinrichtung aus dem Fahrzeug-Verkleidungsteil (2) und einer einstückig mit dem Fahrzeug-Verkleidungsteil (2) ausgebildeten Sensoraufnahme (3) besteht.

## Beschreibung

Die vorliegende Erfindung betrifft eine Aufnahmeeinrichtung zur Befestigung eines Sensors im Bereich einer durchgängigen Aussparung in einem spitzgegossenen polymeren Fahrzeug-Verkleidungsteil, wobei die Aufnahmeeinrichtung aus dem Fahrzeug-Verkleidungsteil und einer einstückig mit dem Fahrzeug-Verkleidungsteil ausgebildeten Sensoraufnahme besteht, wobei die Sensoraufnahme auf der der Sichtseite gegenüberliegenden Rückseite im Bereich der Aussparung vorgesehen ist und, wobei diese Sensoraufnahme folgendes umfasst:
- einen Aufnahmeabschnitt zum Aufnehmen und Halten des Sensors, wobei der Aufnahmeabschnitt so ausgebildet ist, dass der Sensor in Richtung auf die der Sichtseite gegenüberliegenden Rückseite des Fahrzeug-Verkleidungsteils in den Aufnahmeabschnitt einführbar ist, und
- wenigstens eine an den Aufnahmeabschnitt angrenzende und elastisch auslenkbare Rastzunge zur Herstellung einer lösbaren Rastverbindung mit dem Sensor, wobei in der wenigstens einen Rastzunge eine die Rastzunge durchsetzende Rastelementaufnahme zur Aufnahme eines Rastelements des Sensors ausgebildet ist.

Eine derartige Aufnahmeeinrichtung ist aus der US 2006/0267359 A1 vorbekannt. Hierbei weist lediglich der Anbindebereich des Aufnahmeabschnitts zu dem Fahrzeug-Verkleidungsteil eine durchschnittliche Wanddicke im Bereich von 0,8 mm bis 1,8 mm auf und nicht der gesamte Aufnahmeabschnitt und die Rastzunge. Nachteilig an einer vorbekannten Aufnahmeeinrichtung ist, dass trotz der Verringerung der Wandstärke im Anbindebereich zum Fahrzeug-Verkleidungsteil weiterhin sogenannte Einfallstellen (im zitierten Stand der Technik "sink marks" genannt) auftreten können.

Aufgabe der vorliegenden Erfindung ist es daher eine Aufnahmeeinrichtung anzugeben, die eine weiter verbesserten optischen Eindruck und eine verbesserte Ästhetik aufweist, wobei gleichzeitig die notwendige Stabilität und Haltekraft zur Befestigung eines Sensors gewährleistet bleibt.

Diese Aufgabe wird vorliegend gelöst durch eine Aufnahmeeinrichtung zur Befestigung eines Sensors im Bereich einer durchgängigen Aussparung in einem spitzgegossenen polymeren Fahrzeug-Verkleidungsteil, wobei die Aufnahmeeinrichtung aus dem Fahrzeug-Verkleidungsteil und einer einstückig mit dem Fahrzeug-Verkleidungsteil ausgebildeten Sensoraufnahme besteht, wobei die Sensoraufnahme auf der der Sichtseite gegenüberliegenden Rückseite im Bereich der Aussparung vorgesehen ist und, wobei diese Sensoraufnahme folgendes umfasst:
- einen Aufnahmeabschnitt zum Aufnehmen und Halten des Sensors, wobei der Aufnahmeabschnitt so ausgebildet ist, dass der Sensor in Richtung auf die der Sichtseite gegenüberliegenden Rückseite des Fahrzeug-Verkleidungsteils in den Aufnahmeabschnitt einführbar ist, und
- wenigstens eine an den Aufnahmeabschnitt angrenzende und elastisch auslenkbare Rastzunge zur Herstellung einer lösbaren Rastverbindung mit dem Sensor, wobei in der wenigstens einen Rastzunge eine die Rastzunge durchsetzende Rastelementaufnahme zur Aufnahme eines Rastelements des Sensors ausgebildet ist,
wobei der Aufnahmeabschnitt und die wenigstens eine Rastzunge jeweils eine durchschnittliche Wanddicke im Bereich von 0,8 mm bis 1,8 mm aufweisen und, dass als Endabschnitt der wenigstens einen Rastzunge, in Einführrichtung des Sensors vor der jeweiligen Rastelementaufnahme, zusätzlich ein geometrischer Fließhilfeabschnitt vorgesehen ist, um eine Bindenaht über der Rastelementaufnahme zu stabilisieren.

Vorteilhafterweise wird durch die Reduzierung der Wandstärke, sowohl des Aufnahmeabschnitts als auch der wenigstens einen Rastzunge, der negative Effekt einer Einfallstelle auf Sichtseite des Fahrzeug-Verkleidungsteils weiter verringert, da die Gesamtmasse des verwendeten Polymers für die Sensoraufnahme minimiert ist. Um eine ausreichende Stabilität und Haltekraft zur Befestigung eines Sensors zu gewährleisten wurde erfindungsgemäß erkannt, dass als Endabschnitt der wenigstens einen Rastzunge, in Einführrichtung des Sensors vor der jeweiligen Rastelementaufnahme, zusätzlich ein geometrischer Fließhilfeabschnitt vorgesehen werden muss, um eine Bindenaht über der Rastelementaufnahme zu stabilisieren. Eine Bindenaht ist ein Begriff aus der Kunststofftechnik und bezeichnet eine potenzielle Schwachstelle in einem Bauteil. Sie entsteht, wenn beim Spritzgießen des Bauteils zwei Fließfronten aufeinandertreffen und miteinander verschweißen. Die durchgängigen Aussparung in dem spitzgegossenen polymeren Fahrzeug-Verkleidungsteil ist bereits nach dem Spritzgießen des Fahrzeug-Verkleidungsteils fertig ausgebildet, kann alternativ aber auch nachträglich, beispielsweise durch einen Stanz- oder Schneidvorgang, eingebracht sein.

Es kann vorgesehen sein, dass wenigstens zwei Rastzungen vorgesehen sind. Diese beiden Rastzungen können bevorzugt einander gegenüberliegend an der Sensoraufnahme vorgesehen sein.

Es kann vorgesehen sein, dass der Sensor ein Ultraschallsensor oder eine Kamera ist.

Es kann vorgesehen sein, dass der geometrische Fließhilfeabschnitt eine bogenförmige, oder eine wellenförmige oder eine halbkreisförmige Kontur aufweist.

Es kann vorgesehen sein, dass die Fläche des Fließhilfeabschnitts mindestens der Fläche der Ausnehmung der Rastelementaufnahme entspricht.

Es kann vorgesehen sein, dass der Aufnahmeabschnitt zylinderförmig ausgebildet ist.

Es kann vorgesehen sein, dass wenigstens eine Versteifungsrippe auf der wenigstens einen Rastzunge vorgesehen ist.

Es kann vorgesehen sein, dass die wenigstens eine Versteifungsrippe, auf dem Aufnahmeabschnitt beginnend, neben der Rastelementaufnahme verläuft.

Es kann vorgesehen sein, dass sich die wenigstens eine Versteifungsrippe bis zu dem Fließhilfeabschnitt erstreckt.

Es kann vorgesehen sein, dass wenigstens zwei Versteifungsrippen vorgesehen sind.

Es kann vorgesehen sein, dass der Aufnahmeabschnitt und die wenigstens eine Rastzunge jeweils eine durchschnittliche Wanddicke im Bereich von 1,0 mm bis 1,6 mm aufweisen.

Es kann vorgesehen sein, dass das Fahrzeug-Verkleidungsteil eine Wanddicke zwischen 2,5 mm bis 3,5 mm aufweist.

Es kann vorgesehen sein, dass das Fahrzeug-Verkleidungsteil eine Stoßfängerverkleidung oder eine Türaußenverkleidung oder eine Heckklappenaußenverkleidung oder eine Kotflügelverkleidung oder eine Frontmaske oder eine Kühlerverkleidung ist oder, dass das Fahrzeug-Verkleidungsteil Teil einer Stoßfängerverkleidung oder Teil einer Türaußenverkleidung oder Teil einer Heckklappenaußenverkleidung oder Teil einer Kotflügelverkleidung oder Teil einer Frontmaske oder Teil einer Kühlerverkleidung ist. Eine Frontmaske ist derjenige Teil eines Fahrzeugs an deren Stelle sich bei Verbrennungsfahrzeugen der Kühlergrill befunden hat. Insbesondere bei Elektrofahrzeugen ist diese Frontmaske nicht mehr als Lufteinlass zu dem Kühler (den es hier nicht mehr gibt) ausgebildet, sondern als Designelement in der Fahrzeugmitte vorgesehen.

Es kann vorgesehen sein, dass das Polymermaterial des Fahrzeug-Verkleidungsteils Polypropylen und/oder Polycarbonat und/oder Polyethylenterephthalat und/oder AcrylnitrilButadien-Styrol und/oder Polymethylmethacrylat und/oder Polyamid umfasst.

Teil der Erfindung ist ferner eine Anordnung umfassend eine Aufnahmeeinrichtung wie vorstehend beschrieben und einen in der Aufnahmeeinrichtung aufgenommenen und gehaltenen Sensor, wobei der Sensor ein Gehäuse mit einer in einem Bodenbereich davon ausgebildeten Sensorkopf aufweist, wobei der Sensorkopf abschnittsweise oder vollständig in die Aussparung eingefügt ist und mit seinem Ende bündig oder zurückversetzt mit der Außenoberfläche des Fahrzeug-Verkleidungsteils abschließt.

Teil der Erfindung ist ferner ein Verfahren zur Herstellung einer Aufnahmeeinrichtung zur Befestigung eines Sensors, umfassend die folgenden Schritte:
Verfahren zur Herstellung einer Aufnahmeeinrichtung zur Befestigung eines Sensors im Bereich einer durchgängigen Aussparung in einem spitzgegossenen polymeren Fahrzeug-Verkleidungsteil, insbesondere wie vorstehend beschrieben, wobei das Fahrzeug-Verkleidungsteil und eine einstückig mit dem Fahrzeug-Verkleidungsteil ausgebildete Sensoraufnahme in einem Spritzgussverfahren hergestellt wird, wobei die Sensoraufnahme auf der der Sichtseite gegenüberliegenden Rückseite im Bereich der Aussparung vorgesehen wird und, wobei diese Sensoraufnahme einen Aufnahmeabschnitt zum Aufnehmen und Halten des Sensors umfasst, wobei der Aufnahmeabschnitt so ausgebildet wird, dass der Sensor in Richtung auf die der Sichtseite gegenüberliegenden Rückseite des Fahrzeug-Verkleidungsteils in den Aufnahmeabschnitt einführbar ist, und wobei die Sensoraufnahme ferner wenigstens eine an den Aufnahmeabschnitt angrenzende und elastisch auslenkbare Rastzunge zur Herstellung einer lösbaren Rastverbindung mit dem Sensor umfasst, wobei in der wenigstens einen Rastzunge eine die Rastzunge durchsetzende Rastelementaufnahme zur Aufnahme eines Rastelements des Sensors ausgebildet ist, wobei der Aufnahmeabschnitt und die wenigstens eine Rastzunge jeweils eine durchschnittliche Wanddicke im Bereich von 0,8 mm bis 1,8 mm aufweisen und, dass als Endabschnitt der wenigstens einen Rastzunge, in Einführrichtung des Sensors vor der jeweiligen Rastelementaufnahme, zusätzlich ein geometrischer Fließhilfeabschnitt vorgesehen wird, um eine Bindenaht über der Rastelementaufnahme zu stabilisieren.

### Ausführungsbeispiele

Im Folgenden wird die Erfindung anhand lediglich Ausführungsbeispiele darstellender Zeichnungen erläutert. Es zeigen schematisch:
- Fig. 1: eine Rückansicht einer Aufnahmeeinrichtung;
- Fig. 2: eine vergrößerte Detaildarstellung der Rückansicht aus Fig. 1;
- Fig.3: eine Querschnittsdarstellung der Aufnahmeeinrichtung und der Anordnung von Aufnahmeeinrichtung und Sensor;
- Fig. 4: eine weitere Darstellung der Rückansicht der Aufnahmeeinrichtung aus Fig. 1 und Fig. 2 aus einer anderen Perspektive.

In den Figuren werden gleiche oder funktionsgleiche Elemente mit den gleichen Bezugszeichen versehen.

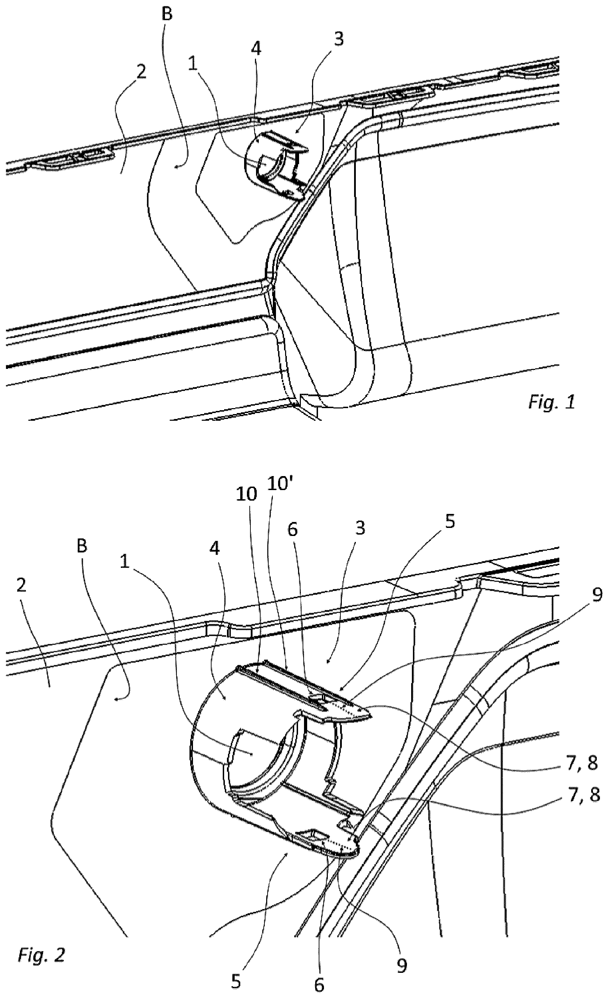

In der Fig. 1 und im Detail in der Fig. 2 ist eine Aufnahmeeinrichtung zur Befestigung eines Sensors 20 im Bereich einer durchgängigen Aussparung 1 in einem spitzgegossenen polymeren Fahrzeug-Verkleidungsteil 2 in einer Rückansicht des Fahrzeug-Verkleidungsteils 2 dargestellt. Die Aufnahmeeinrichtung besteht aus dem Fahrzeug-Verkleidungsteil 2 und einer einstückig mit dem Fahrzeug-Verkleidungsteil 2 ausgebildeten Sensoraufnahme 3, wobei die Sensoraufnahme 3 auf der der Sichtseite A gegenüberliegenden Rückseite B im Bereich der Aussparung 1 vorgesehen ist.

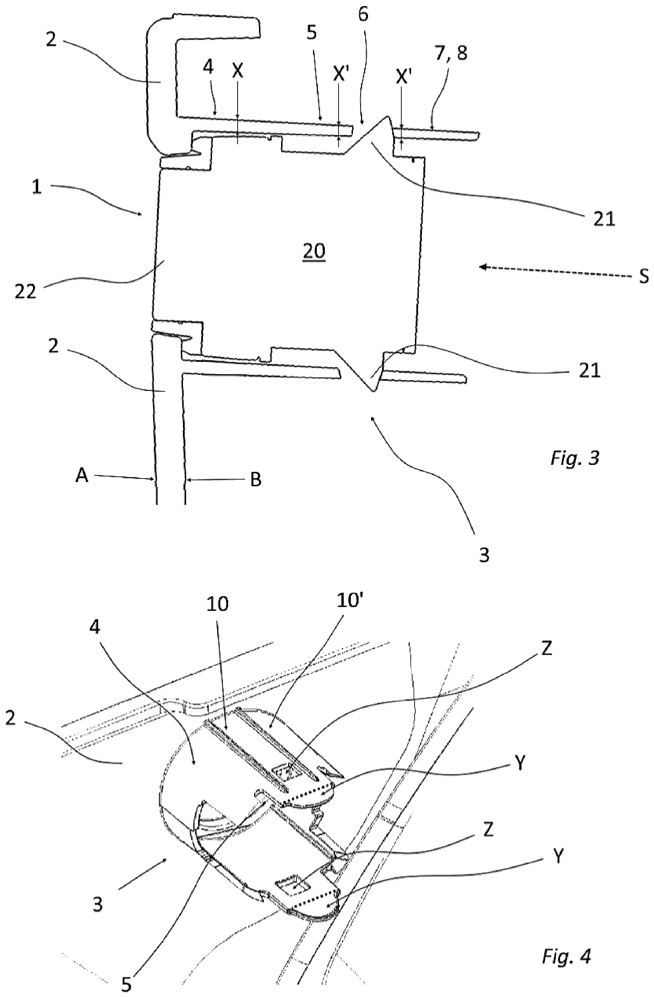

Diese Sensoraufnahme 3 umfasst folgendes:
- einen Aufnahmeabschnitt 4 zum Aufnehmen und Halten des Sensors 20, wobei der Aufnahmeabschnitt 4 so ausgebildet ist, dass der Sensor 20 in Richtung auf die der Sichtseite A gegenüberliegenden Rückseite B des Fahrzeug-Verkleidungsteils 2 in den Aufnahmeabschnitt 4 einführbar ist (vgl. auch Fig. 3), und
- wenigstens eine an den Aufnahmeabschnitt 4 angrenzende und elastisch auslenkbare Rastzunge 5 zur Herstellung einer lösbaren Rastverbindung mit dem Sensor 10, wobei in der wenigstens einen Rastzunge 5 eine die Rastzunge 5 durchsetzende Rastelementaufnahme 6 zur Aufnahme eines Rastelements 21 des Sensors 20 ausgebildet ist.

Wie ersichtlich sind zwei Rastzungen 5 vorhanden. Wie in der Querschnittsdarstellung in Fig. 3 näher erläutert, weisen der Aufnahmeabschnitt 4 und die wenigstens eine Rastzunge 5 jeweils eine durchschnittliche Wanddicke X, X' im Bereich von 0,8 mm bis 1,8 mm auf. Der Aufnahmeabschnitt 4 und die wenigstens eine Rastzunge 5 weisen jeweils eine durchschnittliche Wanddicke im Bereich von 1,0 mm bis 1,6 mm auf. Als Endabschnitt 7 der wenigstens einen Rastzunge 5 ist, in Einführrichtung S des Sensors 10 vor der jeweiligen Rastelementaufnahme 6, zusätzlich ein geometrischer Fließhilfeabschnitt 8 vorgesehen, um eine Bindenaht 9 über der Rastelementaufnahme 6 zu stabilisieren.

Der geometrische Fließhilfeabschnitt 8 weist eine bogenförmige Kontur auf. Weitere alternative Konturen könnten eine wellenförmige oder eine halbkreisförmige Kontur sein.

Wie in Fig. 4 aus einer anderen Perspektive der Aufnahmeeinrichtung ersichtlich entspricht die Fläche Y des Fließhilfeabschnitts 8 mindestens der Fläche Z der Ausnehmung der Rastelementaufnahme 6.

Wie in Figuren 1, 2 und 4 ersichtlich, ist der Aufnahmeabschnitt 4 zylinderförmig ausgebildet. In den besagten Figuren ist dargestellt, dass wenigstens eine Versteifungsrippe 10 auf der wenigstens einen Rastzunge 5 vorgesehen ist. Die wenigstens eine Versteifungsrippe 10 verläuft, auf dem Aufnahmeabschnitt 4 beginnend, neben der Rastelementaufnahme 6. Wie ersichtlich sind wenigstens zwei Versteifungsrippen 10, 10' vorgesehen.

Das Fahrzeug-Verkleidungsteil 2 weist eine Wanddicke zwischen 2,5 mm bis 3,5 mm auf.

Das gezeigte Fahrzeug-Verkleidungsteil 2 ist eine Stoßfängerverkleidung. Alternative könnte das Fahrzeug-Verkleidungsteil eine Türaußenverkleidung oder eine Heckklappenaußenverkleidung oder eine Kotflügelverkleidung oder eine Frontmaske oder eine Kühlerverkleidung sein oder das Fahrzeug-Verkleidungsteil könnte Teil einer Stoßfängerverkleidung oder Teil einer Türaußenverkleidung oder Teil einer Heckklappenaußenverkleidung oder Teil einer Kotflügelverkleidung oder Teil einer Frontmaske oder Teil einer Kühlerverkleidung sein.

In der Fig. 3 ist eine Anordnung umfassend eine vorstehend beschriebene Aufnahmeeinrichtung und einen in der Aufnahmeeinrichtung aufgenommenen und gehaltenen Sensor 20 dargestellt, wobei der Sensor 20 ein Gehäuse mit einem in einem Bodenbereich davon ausgebildeten Sensorkopf 22 aufweist. Der Sensorkopf 22 ist abschnittsweise oder vollständig in die Aussparung 1 eingefügt und schließt mit seinem Ende bündig mit der Außenoberfläche A des Fahrzeug-Verkleidungsteils 2 ab. In dem gezeigten Ausführungsbeispiel handelt es sich um einen Ultraschallsensor 20, wobei der Sensorkopf 22 in diesem Fall eine Ultraschallmembran umfasst. Alternativ zu einem bündigen Abschluss des Endes mit der Außenoberfläche A kann dieses Ende auch zurückversetzt zur Außenoberfläche A sein.

Nachfolgen ist ein Verfahren zur Herstellung einer vorstehend beschriebenen Aufnahmeeinrichtung beschrieben:
Verfahren zur Herstellung einer Aufnahmeeinrichtung zur Befestigung eines Sensors 20 im Bereich einer durchgängigen Aussparung 1 in einem spitzgegossenen polymeren Fahrzeug-Verkleidungsteil 2, insbesondere wie vorstehend beschrieben, wobei das Fahrzeug-Verkleidungsteil 2 und eine einstückig mit dem Fahrzeug-Verkleidungsteil 2 ausgebildete Sensoraufnahme 3 in einem Spritzgussverfahren hergestellt wird, wobei die Sensoraufnahme 3 auf der der Sichtseite A gegenüberliegenden Rückseite B im Bereich der Aussparung 1 vorgesehen wird und, wobei diese Sensoraufnahme 3 einen Aufnahmeabschnitt 4 zum Aufnehmen und Halten des Sensors 20 umfasst, wobei der Aufnahmeabschnitt 4 so ausgebildet wird, dass der Sensor 20 in Richtung auf die der Sichtseite A gegenüberliegenden Rückseite B des Fahrzeug-Verkleidungsteils 2 in den Aufnahmeabschnitt 4 einführbar ist, und wobei die Sensoraufnahme 3 ferner wenigstens eine an den Aufnahmeabschnitt 4 angrenzende und elastisch auslenkbare Rastzunge 5 zur Herstellung einer lösbaren Rastverbindung mit dem Sensor 10 umfasst, wobei in der wenigstens einen Rastzunge 5 eine die Rastzunge 5 durchsetzende Rastelementaufnahme 6 zur Aufnahme eines Rastelements 21 des Sensors 20 ausgebildet ist, wobei der Aufnahmeabschnitt 4 und die wenigstens eine Rastzunge 5 jeweils eine durchschnittliche Wanddicke X, X' im Bereich von 0,8 mm bis 1,8 mm aufweisen und, dass als Endabschnitt 7 der wenigstens einen Rastzunge 5, in Einführrichtung S des Sensors 10 vor der jeweiligen Rastelementaufnahme 6, zusätzlich ein geometrischer Fließhilfeabschnitt 8 vorgesehen wird, um eine Bindenaht 9 über der Rastelementaufnahme 6 zu stabilisieren.

Die durchgängigen Aussparung in dem spitzgegossenen polymeren Fahrzeug-Verkleidungsteil ist bereits nach dem Spritzgießen des Fahrzeug-Verkleidungsteils fertig ausgebildet, kann alternativ aber auch nachträglich, beispielsweise durch einen Stanz- oder Schneidvorgang, eingebracht werden.

## Patentansprüche

1. Aufnahmeeinrichtung zur Befestigung eines Sensors (20) im Bereich einer durchgängigen Aussparung (1) in einem spitzgegossenen polymeren Fahrzeug-Verkleidungsteil (2), wobei die Aufnahmeeinrichtung aus dem Fahrzeug-Verkleidungsteil (2) und einer einstückig mit dem Fahrzeug-Verkleidungsteil (2) ausgebildeten Sensoraufnahme (3) besteht, wobei die Sensoraufnahme (3) auf der der Sichtseite (A) gegenüberliegenden Rückseite (B) im Bereich der Aussparung (1) vorgesehen ist und, wobei diese Sensoraufnahme (3) folgendes umfasst:
- einen Aufnahmeabschnitt (4) zum Aufnehmen und Halten des Sensors (20), wobei der Aufnahmeabschnitt (4) so ausgebildet ist, dass der Sensor (20) in Richtung auf die der Sichtseite (A) gegenüberliegenden Rückseite (B) des Fahrzeug-Verkleidungsteils (2) in den Aufnahmeabschnitt (4) einführbar ist, und
- wenigstens eine an den Aufnahmeabschnitt (4) angrenzende und elastisch auslenkbare Rastzunge (5) zur Herstellung einer lösbaren Rastverbindung mit dem Sensor (10), wobei in der wenigstens einen Rastzunge (5) eine die Rastzunge (5) durchsetzende Rastelementaufnahme (6) zur Aufnahme eines Rastelements (21) des Sensors (20) ausgebildet ist,
**dadurch gekennzeichnet, dass**
der Aufnahmeabschnitt (4) und die wenigstens eine Rastzunge (5) jeweils eine durchschnittliche Wanddicke (X, X') im Bereich von 0,8 mm bis 1,8 mm aufweisen und, dass
als Endabschnitt (7) der wenigstens einen Rastzunge (5), in Einführrichtung (S) des Sensors (10) vor der jeweiligen Rastelementaufnahme (6), zusätzlich ein geometrischer Fließhilfeabschnitt (8) vorgesehen ist, um eine Bindenaht (9) über der Rastelementaufnahme (6) zu stabilisieren.

2. Aufnahmeeinrichtung nach Anspruch 1, **dadurch gekennzeichnet, dass** der geometrische Fließhilfeabschnitt (8) eine bogenförmige, eine wellenförmige oder eine halbkreisförmige Kontur aufweist.

3. Aufnahmeeinrichtung nach Anspruch 1 oder 2, **dadurch gekennzeichnet, dass** die Fläche (Y) des Fließhilfeabschnitts (8) mindestens der Fläche (Z) der Ausnehmung der Rastelementaufnahme (6) entspricht.

4. Aufnahmeeinrichtung nach einem der vorstehenden Ansprüche, **dadurch gekennzeichnet, dass** der Aufnahmeabschnitt (4) zylinderförmig ausgebildet ist.

5. Aufnahmeeinrichtung nach einem der vorstehenden Ansprüche **dadurch gekennzeichnet, dass** wenigstens eine Versteifungsrippe (10) auf der wenigstens einen Rastzunge (5) vorgesehen ist.

6. Aufnahmeeinrichtung nach Anspruch 5, **dadurch gekennzeichnet, dass** die wenigstens eine Versteifungsrippe (10), auf dem Aufnahmeabschnitt (4) beginnend, neben der Rastelementaufnahme (6) verläuft.

7. Aufnahmeeinrichtung nach einem der vorstehenden Ansprüche 5 oder 6, **dadurch gekennzeichnet, dass** wenigstens zwei Versteifungsrippen (10, 10') vorgesehen sind.

8. Aufnahmeeinrichtung nach einem der vorstehenden Ansprüche, **dadurch gekennzeichnet, dass** der Aufnahmeabschnitt (4) und die wenigstens eine Rastzunge (5) jeweils eine durchschnittliche Wanddicke im Bereich von 1,0 mm bis 1,6 mm aufweisen.

9. Aufnahmeeinrichtung nach einem der vorstehenden Ansprüche, **dadurch gekennzeichnet, dass** das Fahrzeug-Verkleidungsteil (2) eine Wanddicke zwischen 2,5 mm bis 3,5 mm aufweist.

10. Anordnung umfassend eine Aufnahmeeinrichtung nach einem der vorstehenden Ansprüche und einen in der Aufnahmeeinrichtung aufgenommenen und gehaltenen Sensor (20), wobei der Sensor (20) ein Gehäuse mit einer in einem Bodenbereich davon ausgebildeten Sensorkopf (22) aufweist, wobei der Sensorkopf (22) abschnittsweise oder vollständig in die Aussparung (1) eingefügt ist und mit seinem Ende bündig oder zurückversetzt mit der Außenoberfläche (A) des Fahrzeug-Verkleidungsteils (2) abschließt.

11. Verfahren zur Herstellung einer Aufnahmeeinrichtung zur Befestigung eines Sensors (20) im Bereich einer durchgängigen Aussparung (1) in einem spitzgegossenen polymeren Fahrzeug-Verkleidungsteil (2), insbesondere nach einem der Ansprüche 1 bis 9, wobei das Fahrzeug-Verkleidungsteil (2) und eine einstückig mit dem Fahrzeug-Verkleidungsteil (2) ausgebildete Sensoraufnahme (3) in einem Spritzgussverfahren hergestellt wird, wobei die Sensoraufnahme (3) auf der der Sichtseite (A) gegenüberliegenden Rückseite (B) im Bereich der Aussparung (1) vorgesehen wird und, wobei diese Sensoraufnahme (3) einen Aufnahmeabschnitt (4) zum Aufnehmen und Halten des Sensors (20) umfasst, wobei der Aufnahmeabschnitt (4) so ausgebildet wird, dass der Sensor (20) in Richtung auf die der Sichtseite (A) gegenüberliegenden Rückseite (B) des Fahrzeug-Verkleidungsteils (2) in den Aufnahmeabschnitt (4) einführbar ist, und wobei die Sensoraufnahme (3) ferner wenigstens eine an den Aufnahmeabschnitt (4) angrenzende und elastisch auslenkbare Rastzunge (5) zur Herstellung einer lösbaren Rastverbindung mit dem Sensor (10) umfasst, wobei in der wenigstens einen Rastzunge (5) eine die Rastzunge (5) durchsetzende Rastelementaufnahme (6) zur Aufnahme eines Rastelements (21) des Sensors (20) ausgebildet ist,
**dadurch gekennzeichnet, dass**
der Aufnahmeabschnitt (4) und die wenigstens eine Rastzunge (5) jeweils eine durchschnittliche Wanddicke (X, X') im Bereich von 0,8 mm bis 1,8 mm aufweisen und, dass als Endabschnitt (7) der wenigstens einen Rastzunge (5), in Einführrichtung (S) des Sensors (10) vor der jeweiligen Rastelementaufnahme (6), zusätzlich ein geometrischer Fließhilfeabschnitt (8) vorgesehen wird, um eine Bindenaht (9) über der Rastelementaufnahme (6) zu stabilisieren.
